Europäisches Patentamt

European Patent Office

Office européen des brevets

(19)

(11) Veröffentlichungsnummer: **0 299 103 B1**

(12) **EUROPÄISCHE PATENTSCHRIFT**

(45) Veröffentlichungstag der Patentschrift: 06.03.91

(51) Int. Cl.⁵: **G01G 11/04**, G01F 1/30, G01F 1/20, G01G 3/14

(21) Anmeldenummer: 87110319.8

(22) Anmeldetag: 17.07.87

(54) **Vorrichtung zum kontinuierlichen Wägen von fliessfähigem Gut.**

(43) Veröffentlichungstag der Anmeldung:
18.01.89 Patentblatt 89/03

(45) Bekanntmachung des Hinweises auf die
Patenterteilung:
06.03.91 Patentblatt 91/10

(84) Benannte Vertragsstaaten:
AT BE CH DE ES FR GB GR IT LI LU NL SE

(56) Entgegenhaltungen:
EP-A- 0 042 242
EP-A- 0 169 427
DE-A- 3 234 258
DE-A- 3 410 845
US-A- 4 260 034

TECHNISCHE MITTEILUNGEN A.E.G. TELE-
FUNKEN, Band 71, Nr.3, 1981, Seiten 111-114,
Frankfurt, DE; J.J. VON ST. VITH:
"Schüttgutstrommesser - Vorteile und Anwendungsbeispiele"

(73) Patentinhaber: **GDT Lothar Thienelt & Co. OHG**
**Eupener Strasse 150**
**W-5000 Köln 41(DE)**

(72) Erfinder: **Dutkiewicz, Peter**
**Hochstrasse 4**
**W-4030 Ratingen 1(DE)**

(74) Vertreter: **Dipl.-Ing. H. Hauck, Dipl.-Ing. E.**
**Graalfs, Dipl.-Ing. W. Wehnert, Dr.-Ing. W. Dö-**
**ring**
**Mörikestrasse 18**
**W-4000 Düsseldorf 30(DE)**

## Beschreibung

Die vorliegende Erfindung betrifft eine Vorrichtung zum kontinuierlichen Wägen von fließfähigem, insbesondere pulver- oder granulatförmigem, Gut mit den Merkmalen des Oberbegriffs des Patentanspruchs 1.

Aus der DE-A1-3 410 845 ist eine Vorrichtung zum kontinuierlichen Wägen von fließfähigem Gut bekannt, bei der das Gut durch einen Trichter abgegeben wird. Bei dieser bekannten Vorrichtung tritt keine Wanderung des Gutstromes auf dem Sensor auf, da das Schüttgut immer auf die gleiche Sensorstelle trifft. Lediglich am Ende des Entleerungsvorganges des Trichters könnten minimal kleine Wanderungsbewegungen über den Trichteröffnungsquerschnitt auftreten, die jedoch vernachlässigbar gering sind. Was das Trägerelement und die Aufprallplatte dieser bekannten Vorrichtung anbetrifft, so sind diese einstückig ausgebildet. Die Meßwertgeber sind hierbei an einem verengten Bereich zwischen Trägerelement und Aufprallplatte angeordnet.

Bei der aus der EP-A-0 169 427 bekannten Vorrichtung kommt ein Horizontalförderer zur Anwendung, bei dem unterschiedliche Wurfweiten vorhanden sein können. Der Sensor ist hierbei so angeordnet, daß die durch eine Horizontalachse seiner Aufprallplatte verlaufende Vertikalebene quer zur Wurfebene des Gutstromes verläuft. Als Trägerelement kommt ein Bauteil zur Anwendung, das aus einer Vielzahl von Bauelementen besteht, nämlich einem horizontalen Klemmelement, an dem zwei vertikale, mit Meßwertgebern versehene Federplatten angeordnet sind, welche mit ihren unteren Enden an einem weiteren Horizontalelement befestigt sind, das an einem Hauptträger fixiert ist.

Eine Vorrichtung mit den Merkmalen des Oberbegriffs des Patentanspruchs 1 ist aus der EP-A-42 242 bekannt. Bei dieser bekannten Vorrichtung ist am Austragsende einer einen Strom des fließfähigen Gutes erzeugenden Einrichtung (Förderschnecke) ein Sensor so angeordnet, daß die durch eine Horizontalachse seiner Aufprallplatte verlaufende Vertikalebene quer zur Wurfebene des Gutstromes verläuft. Das fließfähige Gut trifft daher an unterschiedlichen lichen Punkten der Aufprallplatte auf, wenn sich die Wurfweite des Gutes verändert, was beispielsweise durch Änderung der Geschwindigkeit des Förderorganes bewirkt werden kann. Der einseitig eingespannte Sensor verbiegt sich daher unterschiedlich stark, da sich der Hebelarm der an der Aufprallplatte angreifenden Kraft verändert.

Bei der bekannten Vorrichtung ist die Aufprallplatte an einem relativ schmal gehaltenen Trägerelement befestigt, an dem vier Meßwertgeber angeordnet sind, welche als Dehnungsmeßstreifen ausgebildet sind. Das Trägerelement ist dabei als Trägerarm ausgebildet und besitzt über seine Länge einen gleichmäßigen Querschnitt.

Die bekannte Vorrichtung funktioniert so, daß beim Auftreffen des Gutstromes auf die Aufprallplatte eine mehr oder weniger starke Verbiegung des Trägerelementes, an dem die Meßwertgeber angeordnet sind, erfolgt. Durch diese Verbiegung werden Materialdehnungen bzw. -kontraktionen hervorgerufen, die von den am Trägerelement angeordneten Meßwertgebern erfaßt werden. In Abhängigkeit von diesen Dehnungen bzw. Kontraktionen erzeugen die Meßwertgeber elektrische Signale, die einer elektrischen Signalverarbeitungs-bzw. -auswerteschaltung zugeführt werden. Die Signale werden dort, beispielsweise über eine geeignete Brückenschaltung, ausgewertet und einer Anzeigeeinrichtung zugeführt bzw. direkt zur Steuerung des entsprechenden Förderorganes weiterverwendet. Sie stellen ein Maß für den Gutdurchsatz dar.

Der Erfindung liegt die Aufgabe zugrunde, eine Vorrichtung der angegebenen Art zu schaffen, die mit einem besonders hohen Grad an Genauigkeit arbeitet.

Diese Aufgabe ist erfindungsgemäß bei einer Vorrichtung der eingangs beschriebenen Art dadurch gelöst, daß die Aufprallplatte so angeordnet ist, daß die durch ihre Horizontalachse verlaufende Vertikalebene parallel zur Wurf-bzw. Wanderebene des Gutstromes verläuft und daß das Trägerelement ebenfalls als Platte ausgebildet ist, deren gegenüberliegende Befestigungsbereiche durch Versteifung der Platte gegenüber einem mittleren Bereich, an dem der Meßwertgeber angeordnet ist, im wesentlichen dehnungsfrei gehalten sind.

Erfindungsgemäß wurde festgestellt, daß es für den Genauigkeitsgrad der Messung von großer Bedeutung ist, in welcher Weise die Aufprallplatte realtiv zum Gutstrom angeordnet ist. Wie bereits eingangs erläutert, trifft bei den aus der EP-A-0169 427 und der EP-A-42 242 bekannten Vorrichtungen der Gutstrom so auf die Aufprallplatte auf, daß sich bei einer Änderung der Wurfweite auch der Agriffspunkt des Gutstromes auf der Aufprallplatte verändert, wobei diese Veränderung des Angriffspunktes, die parallel zur Längsachse des Sensors erfolgt, eine Änderung des Hebelarmes mit sich bringt. Aufgrund der hierdurch bedingten Änderung des Biegemomentes erfolgt auch eine Änderung der Dehnung, so daß hieraus aufgrund der unterschiedlichen Empfindlichkeiten der jeweiligen Meßpunkte verfälschte Meßergebnisse resultieren würden, wenn nicht über eine spezielle Anordnung von DMS hierfür Abhilfe geschaffen würde, die jedoch immer noch nur eine beschränkte Meßgenauigkeit gestattet. Erfindungsgemäß wurde dies erkannt und in einfacher Weise hierfür Abhilfe geschaffen. Dies wird dadurch erreicht, daß die Aufprallplatte so angeordnet wird, daß die durch ihre Horizontalachse verlaufende Vertikalebene parallel zur Wurf- bzw. Wanderebene des Gutstromes verläuft * . Mit anderen Worten, gegenüber der aus der vorstehend genannten Veröffentlichung bekannten Anordnung der Aufprallplatte wird diese hierzu um 90° versetzt angeordnet. Ändert sich jetzt die Wurfweite des Gutstromes, so entstehen hierdurch keine veränderten Verhältnisse in bezug auf den Hebelarm bzw. das Biegemoment, da der Gutstrom trotz veränderter Wurfweite entlang einer Linie auf die Aufprallplatte trifft, die überall einen gleichen Abstand zum Meßwertgeber aufweist.

An dieser Stelle seien kurz die Begriffe "Wurfebene" und "Wanderebene" des Gutstromes erläutert. Die erfindungsgemäß ausgebildete Vorrichtung kann bei einer Vielzahl von Förderorganen Verwendung finden und ist nicht auf eine spezielle Art eines solchen Organs beschränkt. So kann sie beispielsweise in Verbindung mit Horizontalförderern, wie Vibrationsrinnen, Förderschnecken oder Förderbändern, Verwendung finden. Der Sensor kann dabei direkt hinter dem Förderorgan angeordnet sein, so daß das von dem Förderorgan abgeworfene Gut direkt auf die Aufprallplatte des Sensors trifft. Dabei wird die Entfernung zwischen dem Ende des Förderorganes und dem Punkt des Auftreffens des Gutes auf die Aufprallplatte als Wurfweite bezeichnet.

Der Sensor kann jedoch auch bei Förderorganen Verwendung finden, die das zu fördernde Gut in ein unten offenes Behältnis fördern, unter dem der Sensor angeordnet ist. Bei einem solchen Behältnis kann es sich beispielsweise um einen Trichter handeln. Diese Behältnisse besitzen ein Steuerorgan, mit dem die Öffnung des Behältnisses veränderbar ist und schließlich ganz verschlossen werden kann. Es versteht sich dabei, daß bei einer Verringerung der Austrittsöffnung des Behältnisses der austretende Gutstrom in seinem Querschnitt eingeschränkt wird, wobei die Achse des Gutstromes in Bewegungsrichtung des Steuerorgans (Schieber) wandert. Beim Vergrößern des Öffnungsquerschnittes erfolgt der umgekehrte Vorgang. Die Vertikalebene, innerhalb der dieser Wanderungsvorgang erfolgt, wird hier als Wanderebene des Gutstromes bezeichnet.

Wenn nunmehr die erfindungsgemäß ausgebildete Vorrichtung in Verbindung mit einem derartigen Förderorgan eingesetzt wird, so wird die Aufprallplatte so angeordnet, daß bei einer durch ein Steuerorgan verursachten Wanderung der Gutstromachse diese Wanderung entlang einer Linie auf der Aufprallplatte erfolgt, welche immer den gleichen Abstand vom Meßwertgeber besitzt.

Die Erfindung bietet daher den Vorteil, daß bei Durchsatzänderungen des zugehörigen Förderorgans bzw. von entsprechenden Behältnissen, die sich durch eine Änderung der Wurfweite bzw. ein Auswandern der Gutstromachse bemerkbar machen, immer auf der gleichen Empfindlichkeitsachse der Aufprallplatte gemessen wird, so daß sich hierdurch keine Verfälschungen der Meßergebnisse ergeben.

Eine weitere Maßnahme der Erfindung zur Verhinderung von Fehlmessungen besteht darin, daß das den mindestens einen Meßwertgeber aufweisende Trägerelement in dehnungsfreie bzw. dehnungsarme Bereiche und einen Bereich hoher Dehnung aufgegliedert ist. Dies wird zum einen dadurch erreicht, daß das Trägerelement als Platte ausgebildet ist. Bei einer derartigen Platte läßt sich eine Trennung in derartige Bereiche in geeigneter Weise durchführen. Zum anderen ist die Platte in ihren gegenüberliegenden Befestigungsbereichen, an denen die feste Einspannung des Sensors an irgendeinem Gestell oder Rahmen und die Befestigung der Aufprallplatte an der Trägerplatte erfolgt, gegenüber einem mittleren Bereich entsprechend versteift. In diesem mittleren Bereich ist der mindestens eine Meßwertgeber angeordnet. Dies hat zur Folge, daß die durch die jeweiligen Befestigungen hervorgerufenen Spannungen (Klemmspannungen) aufgrund der versteiften Bereiche dort im wesentlichen keine Materialverformungen (Dehnungen) hervorrufen können, die das Meßergebnis verfälschen könnten.

Da die Steifigkeit des mittleren Bereiches, in dem der mindestens eine Meßwertgeber angeordnet ist, geringer ist als in den beiden Befestigungsbereichen, erfolgt die durch das Auftreffen des Gutstromes auf die Prallplatte erzeugte Verbiegung konzentriert in diesem Bereich. Daher treten an dieser Stelle maximale Materialdehnungen und -kontraktionen auf, die durch einen oder mehrere Meßwertgeber optimal erfaßt werden können. Die Empfindlichkeit der Meßwertgeber muß daher nicht allzugroß sein bzw. es können genauere Meßergebnisse erzielt werden.

Bei einer speziellen Ausführungsform der erfindungsgemäßen Vorrichtung ist die Trägerplatte ferner in einem dem Befestigungsbereich des Sensors benachbarten Bereich, in dem Kompensations- und Abgleichelemente angeordnet sind, durch Versteifung im wesentlichen dehnungsfrei gehalten. Hierdurch wird eine weitere dehnungsarme bzw. dehungsfreie Zone erzeugt, in der derartige Elemente, beispielsweise zur Temperaturkompensation, angeordnet werden können. Die Funktionsweise dieser Elemente wird daher nicht durch Materialdehnungen gestört, welche auf Verbiegungen zurückgehen, die durch den auftreffen-

* bzw. mit dieser zusammenfällt

den Gutstrom erzeugt werden.

Die Trägerplatte ist zweckmäßigerweise in den Befestigungsbereichen bzw. dem Bereich der Kompensations-Abgleichelemente durch Abkantung bzw. Abrundung der Seitenränder versteift. Hierdurch wird eine erhöhte Biegesteifigkeit der entsprechenden Bereiche erreicht, so daß diese Bereiche im wesentlichen dehnungsfrei gehalten werden können und sich die durch die Befestigung der Aufprallplatte an der Trägerplatte und der Trägerplatte an einem festen Gestell ergebenden Klemmspannungen nicht schädlich auf die Messungen auswirken, da durch die erhöhte Biegesteifigkeit dieser Bereiche verhindert wird, daß die Klemmspannungen in den Bereich eingeleitet werden, in dem der Meßwertgeber angeordnet ist. Vorzugsweise ist auch die der Aufprallplatte zugewandte Stirnkante der Trägerplatte abgekantet, wodurch der Befestigungsbereich der Trägerplatte für die Aufprallplatte eine besonders hohe Biegesteifigkeit erhält. Es versteht sich, daß neben den Maßnahmen der Abkantung bzw. Abrundung weitere Maßnahmen getroffen werden können, um die Biegesteifigkeit der entsprechenden Bereich zu erhöhen. Dies kann beispielsweise auch dadurch erreicht werden, daß in diesen Bereichen die Materialstärke erhöht wird. Wie später ausgeführt, sind bei einer weiteren speziellen Ausführungsform der Erfindung in den Befestigungsbereichen entsprechende Klemmplatten vorgesehen, über die die entsprechende Befestigung erfolgt. Diese Klemmplatten tragen ebenfalls zur Versteifung der jeweiligen Bereiche bei. Die Maßnahme der Abkantung bzw. Abrundung hat den Vorteil, daß die Trägerplatte aus einem relativ dünnen Material, beispielsweise federelastischem Stahl, hergestellt und durch relativ einfache Maßnahmen die entsprechende Aufteilung in dehnungsarme und dehnungsverstärkte Bereiche erreicht werden kann.

Der vorstehend erwähnte Effekt wird noch dadurch verstärkt, daß der mittlere Bereich der Trägerplatte seitlich geschlitzt ist und daß der mindestens eine Meßwertgeber auf der gebildeten Materialbrücke angeordnet ist. Hierdurch entsteht ein Plattenbereich, der gegenüber den übrigen Plattenbereichen eine verringerte Breite besitzt und daher besonders leicht verbiegbar ist. Es sind zwei seitliche Schlitzt vorgesehen, so daß sich symmetrische Verhältnisse ergeben. Die Schlitze besitzen vorzugsweise vom Anfang bis zum Ende gleiche Breite, wodurch die Aufprallplatte in der Länge kompakt gehalten werden kann.

In Weiterbildung der Erfindung sind zwei Meßwertgeber vorgesehen, die in den Randabschnitten des mittleren Bereiches angeordnet sind. Hierbei weist auch der mittlere Bereich zwischen den beiden Meßwertgebern einen Schlitz auf, und die beiden Meßwertgeber sind auf den beiden gebildeten Materialbrücken angeordnet. Durch den zusätzlichen Schlitz zwischen den beiden Meßwertgebern wird die Verbiegbarkeit des mittleren Bereiches weiter erhöht. Die Meßwertgeber sind dabei so angeordnet, daß zwischen ihnen ein möglichst großer Abstand vorhanden ist, um auf diese Weise die entsprechenden Dehnungen über einen grossen Breitenbereich der Aufprallplatte erfassen zu können. Die seitlichen Abrundungen bzw. Abkantungen der Platte beginnen kurz hinter den Meßwertgebern, wobei die seitlichen Schlitze vorzugsweise bis zu dem der Aufprallplatte zugewandten Ende der Abrundung bzw. Abkantung geführt sind.

Bei der vorstehend beschriebenen Ausführungsform sind die beiden Meßwertgeber sowie die entsprechenden Kompensations-und Abgleichelemente an der Unterseite der Trägerplatte angeordnet. Bei einer speziellen Ausführungsform sind weitere zwei Meßwertgeber auf der Oberseite der Platte vorgesehen, und zwar in einer den beiden Meßwertgebern auf der Unterseite gegenüberliegenden Lage auf der Oberseite der gebildeten Materialbrücken. Bei dieser Ausführungsform werden somit Dehnungen bzw. Kontraktionen auf der Unter-bzw. und Oberseite der Trägerplatte erfaßt, so daß sich eine sehr genaue Messung durchführen läßt. Darüberhinaus läßt sich bei vier Meßwertgebern die Signalverarbeitung bzw. -auswertung in einfacher Weise über eine entsprechende Brückenschaltung (Wheatston'sche Brücke) durchführen.

Dadurch, daß bei der erfindungsgemäß ausgebildeten Vorrichtung die Aufprallplatte und das Trägerelement (Trägerplatte) getrennte Bauteile darstellen, lassen sich mehrere Vorteile erzielen. Zum einen ist es möglich, in Anpassung an das Schüttgut, dessen Durchsatzleistung etc. verschieden große Aufprallplatten vorzusehen, ohne daß hierbei eine neue Trägerplatte, die die entsprechenden Meßeinrichtungen trägt, vorgesehen werden muß. Wenn beispielsweise ein anderes Schüttgut zum Einsatz kommt, wird die vorhandene Aufprallplatte vom Trägerelement gelöst und durch eine andere Platte ersetzt. Die Befestigung der Aufprallplatte am Trägerelement ist so ausgebildet, daß ein derartiger Austausch in einfacher und rascher Weise möglich ist. Hierzu ist an der Unterseite der Trägerplatte in deren Befestigungsbereich eine Klemmplatte vorgesehen, durch die sich Befestigungselemente, beispielsweise Schrauben, nach oben durch die Trägerplatte bis in die Aufprallplatte erstrecken. Wenn die Oberfläche der Aufprallplatte nicht durch derartige Befestigungselemente unterbrochen werden soll, empfiehlt es sich, unter der Aufprallplatte eine weitere Klemmplatte vorzusehen und diese Klemmplatte beispielsweise mit der Aufprallplatte zu verkleben. Die zuletzt erwähnte Klemmplatte kann dann mit der Klemmplatte unterhalb der Trägerplatte verschraubt werden.

Zum anderen wird durch die Aufteilung des Sensors in eine Aufprallplatte und eine Trägerplatte erreicht, daß beide Elemente aus verschieden Materilien hergestellt sein können, un auf diese Weise optimale Materilien für die jeweilige Funktion des entsprechenden Elementes auswählen zu können. So kann beispielsweise das Trägerelement aus gehärtetem Spezialstahl (Federstahl) hergestellt sein, der sich für die vorstehend beschriebenen Funktionen, die die Trägerplatte erfüllen muß, als besonders geeignet erweist. Die Aufprallplatte hingegen kann aus Leichtmetall bzw. Leichtmetallegierungen (Aluminium etc.) bestehen, wodurch sich das Gewicht der Aufprallplatte in vorteilhafter Weise reduzieren läßt. Hierdurch ist eine Erhöhung der Resozanzfrequenz möglich, wodurch entsprechende Dämpfungsmaßnahmen eingespart werden können, die sonst erforderlich wären, um ein rauschfreies Signal zu erzielen. Die Stärke der Aufprallplatte kann je nach Schüttgut beispielsweise 0,5 - 2 mm betragen.

Desweiteren ist es durch die Aufteilung in zwei getrennte Platten möglich, die Befestigung beider Platten aneinander über Zwischenelemente zu bewerkstelligen, die ein relativ niedriges Wärmeleitvermögen besitzen, beispielsweise Keramik. Beispielsweise kann die vorstehend erwähnte zweite Klemmplatte aus einem derartigen Material bestehen.Es kann jedoch auch eine Keramikplatte zwischen die obere Klemmplatte und die Trägerplatte geklemmt werden. Durch ein solches wärmeunempfindliches Zwischenstück wird erreicht, daß die erhöhten Temperaturen, denen die Aufprallplatte bei bestimmten Schüttgütern ausgesetzt ist, nicht auf die Trägerplatte übertragen werden und somit die entsprechenden Meßergebnisse verfälschen.

Es wurde bereits vorstehend erwähnt, daß der erfindungsgemäße Sensor bzw. die entsprechende Aufprallplatte so gegenüber dem Gutstrom angeordnet ist, daß bei einer Änderung des Angriffspunktes der Gutstromachse auf der Aufprallplatte diese Änderung immer entlang einer Horizontallinie erfolgt, die den gleichen Abstand zum Meßwertgeber bzw. dem entsprechenden Biegebereich des Trägerelementes besitzt. Dieser Effekt wird in Weiterbildung der Erfindung noch dadurch verstärkt, daß die den Strom des Gutes erzeugende Einrichtung an ihrem Austragsende V- oder U-förmig ausgebildet ist. Hierdurch wird in seitlicher Richtung eine weitere Konzentration des Schüttgutes auf die vorstehend erwähnte horizontale Linie (Empfindlichkeitsachse) erreicht. Dies sei an dem Beispiel eines Horizontalförderers erläutert. Wenn der Horizontalförderer einen rechteckförmigen Austrittsquerschnitt besitzt, so streut das Schüttgut über einen bestimmten Bereich der seitlich dazu angeordneten Aufprallplatte, wobei vorausgesetzt wird, daß die gewünschte Meßlinie bzw. Empfindlichkeitsachse der Aufprallplatte mit der Mitte des rechteckförmigen Austrittsquerschnittes des Förderorganes übereinstimmt. Bei einem entsprechend hohen Durchsatz an Schüttgut ist gewährleistet, daß diese Empfindlichkeitsachse auch tatsächlich mit der Mitte des Schüttgutstromes übereinstimmt. Wird jedoch der Durchsatz verringert, so kann es passieren, daß sich der Schüttgutstrom nicht mehr auf die Mitte des Austragsorganes konzentriert, sondern in Bereiche links und rechts der Mitte auswandert, so daß sich entsprechende Verlagerungen des Kraftangriffspunktes auf der Aufprallplatte und damit Abweichungen von der Empfindlichkeitsachse ergeben. Diese Abweichungen sind unerwünscht und führen zu Verfälschungen des Meßergebnisses. Wenn jedoch die den Strom des Gutes erzeugende Einrichtung an ihrem Auftragsende V- oder U-förmig ausgebildet ist, konzentriert sich auch in den Fällen geringen Durchsatzes das Fördergut immer auf die tiefste Stelle des Austrittsquerschnitts, die der Mitte entspricht, so daß keine Abweichungen von der Empfindlichkeitsachse der Aufprallplatte mehr zu befürchten sind.

Die Befestigung der Trägerplatte und damit des Sensors an einem Grundgestell, die eine feste Einspannung desselben bewirken soll, erfolgt vorteilhafterweise ebenfalls über zwei Klemmplatten, die über und unter der Trägerplatte in deren Befestigungsbereich angeordnet sind. Die untere Klemmplatte wird dabei über geeignete Befestigungselemente, beispielsweise Schrauben, am Grundgestell befestigt. Über entsprechende Klemmittel (Schrauben) werden beide Klemmplatten gegeneinander gezogen, so daß eine feste Einspannung der Aufprallplatte zwischen den Klemmplatten erfolgt. Wie bereits erwähnt, erhöhen die Klemmplatten die Steifigkeit des Befestigungsbereiches der Trägerplatte. Sie bestehen vorzugsweise aus gehärtetem Präzisionsstahl, der eine möglichst geringe Materialdehnung zuläßt.

Bei einer speziellen Ausführungsform besitzt die untere Klemmplatte eine mittlere Ausnehmung, in der eine Anschlußleiste für den Meßwertgeber und die ggf. vorhandenen Kompensations-und Abgleichelemente vorgesehen ist. Hierdurch wird eine geschützte Unterbringung der jeweiligen elektrischen Anschlüsse erreicht.

Die Vorrichtung besitzt ferner zweckmäßigerweise eine Abdeckhaube aus einem geeigneten Material, beispielsweise Kunststoff, die die Trägerplatte abdeckt. Diese Abdeckhaube besitzt vorzugsweise heruntergezogene Seitenwände, so daß auch ein seitlicher Schutz der Trägerplatte erreicht wird. Im vorderen Bereich greift die Abdeckplatte geringfügig über die Aufprallplatte.

Die Aufprallplatte weist zweckmäßigerweise Abkantungen auf, die eine entsprechende Versteifung der Platte bewirken. Hierdurch wird sichergestellt, daß die entsprechende Aufprallenergie über die erhöhte Biegesteifigkeit weitgehend unverringert in die Trägerplatte geleitet wird.

Bei den Meßwertgebern handelt es sich vorteilhafterweise um Dehnungs-Meßwiderstände von Dehnungsmeßstreifen, die in geeigneter Weise an der Trägerplatte befestigt sind. Bei der vorstehend beschriebenen speziellen Ausführungsform sind vier Dehnungsmeßwiderstände vorgesehen, wobei sich bei einer Verbiegung des mittleren Bereiches der Trägerplatte die Widerstandswerte der beiden oben liegenden Dehnungsmeßwiderstände infolge einer Dehnung erhöhen, während sich die Widerstände der beiden unten liegenden Dehnungsmeßwiderstände infolge einer Materialkontraktion verringern. Die Änderung dieser Widerstandwerte stellt daher ein Maß für den momentanen Gutstrom dar.

Die Dehnungs-Meßwiderstände sind vorteilhafterweise in Form einer Brücke geschaltet. Die eine Diagonale dieser Brücke ist an eine Spannungsquelle angeschlossen, während sich von der anderen Diagonalen der Brücke ein der Biegung des mittleren Bereiches der Trägerplatte und damit dem Gutdurchsatz proportionales elektrisches Signal entnehmen läßt. Dieses Signal kann in einem Verstärker verstärkt und mit einem Meßgerät als Meßwert angezeigt werden. Wahlweise kann auch eine Integrationseinrichtung oder eine summenbildende Einrichtung zwischengeschaltet werden, um störende Schwingungseinflüsse und ähnliches zu reduzieren bzw. um das Gewicht des durchlaufenden Gutes in einer vorgegebenen Zeitspanne zu ermitteln. Natürlich können auch andere Auswertegeräte vorgesehen werden.

Die Erfindung wird nachfolgend anhand eines Ausführungsbeispiels in Verbindung mit der Zeichnung im einzelnen erläutert. Es zeigen:

Figur 1     eine schematische Darstellung einer Vorrichtung zum kontinuierlichen Wägen von fließfähigem Gut;

Figur 2     eine Unteransicht des Sensors der Vorrichtung der Figur 1; und

Figur 3     eine Seitenansicht des in Figur 2 dargestellten Sensors.

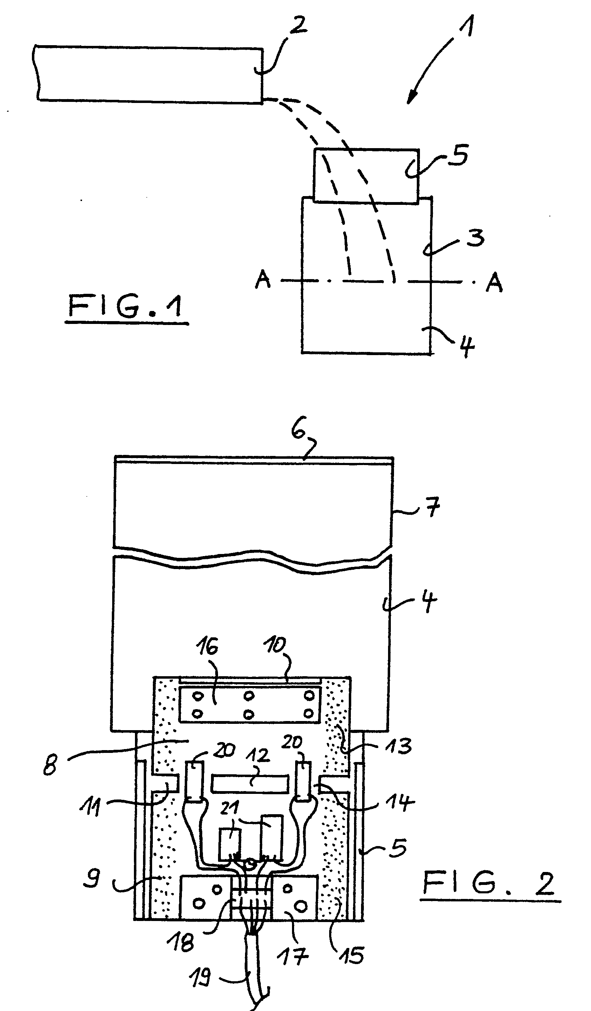

Die in Figur 1 schematisch dargestellte Vorrichtung umfaßt eine Einrichtung 2, die einen Strom eines kontinuierlich zu wägenden fließfähigen Gutes erzeugt. Bei dieser Einrichtung kann es sich beispielsweise um eine Förderschnecke handeln. Am Austragsende der Förderschnecke wird das fließfähige Gut abgeworfen und trifft auf die Aufprallplatte 4 eines Sensors 3, der an irgendeinem Gestell (nicht gezeigt) fest eingespannt ist. der Sensor ist so angeordnet, daß die Achse des Gutstromes auf eine Empfindlichkeitsachse A der Aufprallplatte 4 trifft, die sich etwa in der Mitte der Platte befindet. Der Sensor 3 ist geneigt angeordnet (etwa einem Winkel von 45 ° zur Vertikalen). Er ist relativ zum Förderorgan so angebracht, daß die durch die Achse (A) verlaufende Vertikalebene parallel zur Wurfebene des Förderorgans verläuft. Diese Anordnung bewirkt, daß bei Durchsatzänderungen des Förderorgans und hierdurch bedingter veränderter Wurfweiten der Angriffspunkt des Gutstromes auf der Aufprallplatte 4 immer auf der Empfindlichkeitsachse A verbleibt. Um dies auch in seitlicher Richtung des Förderorganes sicherzustellen, besitzt dieses ein V-förmig ausgebildetes Austragsende, wobei die durch den tiefsten Punkt des Austragsendquerschnittes verlaufende Ebene die Empfindlichkeitsachse A schneidet.

Der Sensor 3 umfaßt desweiteren eine Trägerplatte 8, an der die Aufprallplatte 4 befestigt ist und mittels der der Sensor an dem erwähnten Gestell befestigt ist. Die Befestigung am Gestell ist so ausgebildet, daß sich als statisches Element ein einseitig eingespannter Kragbalken ergibt. Die Trägerplatte 8 ist in Figur 1 nicht zu erkennen, da sie durch eine Abdeckplatte 5 abgedeckt ist.

Die Aufprallplatte 4 weicht federelastisch unter der Wirkung der Fallenergie bzw. Aufprallwucht des auftreffenden Fördergutes aus. Hierbei ist der Betrag der Ausweichbewegung praktisch proportional dem Gewicht des momentan das Austragsende des Förderorganes verlassenden Gutes. Diese Ausweichbewegung der Aufprallplatte 4 bzw. die davon hervorgerufene Verbiegung der Trägerplatte 8 wird über Meßwertgeber erfaßt und in elektrische Signale umgewandelt.

Figur 2 zeigt eine Unteransicht des in Figur 1 dargestellten Sensors 3. Die rechteckförmige Aufprallplatte 4 ist an ihren beiden Seitenrändern 7 sowie dem der Trägerplatte 8 zugewandten Stirnrand nach oben gekantet, während der freie Rand 6 nach unten gekantet ist. Durch diese Maßnahme wird die Steifigkeit der Aufprallplatte 4 erhöht. Die aus Aluminium bestehende und 0,5 mm dicke Aufprallplatte 4 ist auf ihrer Unterseite an ihrem der Trägerplatte 8 zugewandten Stirnende mit einer Klemmplatte (in Figur 2 nicht gezeigt) verklebt, welche zur Befestigung der Trägerplatte 8 dient. Die Befestigung erfolgt dabei so, daß die Trägerplatte zwischen dieser Klemmplatte und einer weiteren, unter der Trägerplatte angeordneten Klemmplatte 16 angeordnet ist und durch geeignete Befestigungselemente, beispielsweise Schrauben, zwischen den beiden Klemmplatten festgeklemmt wird. Heirdurch ergibt sich eine im wesentlichen spannungsfreie Lagerung der Aufprallplatte 4.

Die Trägerplatte 8 ist ebenfalls etwa rechteckförmig ausgebildet und weist nach unten abgerundete seitliche Randabschnitte 13 sowie einen nach unten abgekanteten Stirnrand 10 auf. Diese Abrundungen und Abkantungen dienen dazu, der Trägerplatte 8 in den jeweiligen Bereichen eine erhöhte Biegesteifigkeit zu verleihen. Die Abrundungen 13 sind im mittleren Bereich der Trägerplatte 8 durch sich seitlich von den Rändern der Platte aus in deren Inneres erstreckende Schlitze 11 unterbrochen. Diese Schlitze erstrecken sich soweit nach innen wie die entsprechende Abrundung 13 reicht. In einer Linie mit den Schlitzen 11 ist ein Mittelschlitz 12 angeordnet, der die gleiche Breite wie die Seitenschlitze besitzt. Zwischen den Schlitzen werden somit zwei Materialbrücken gebildet. Auf der Ober- und Unterseite dieser Materialbrücken sind Dehnungsmeßwiderstände 20 von Dehnungsmeßstreifen angeordnet, welche in geeigneter Weise an den beiden Oberflächen der Trägerplatte 8 befestigt sind.

Durch die Abrundungen, Abkantungen und Schlitze ist die Trägerplatte 8 so aufgegliedert, daß sich zwei Endbereiche 13, 15 mit erhöhter Biegesteifigkeit und ein mittlerer Bereich 14 mit reduzierter Biegesteifigkeit ergeben. Bei Beaufschlagung der Aufprallplatte 4 mit dem Gut erfährt somit die Trägerplatte 8 in ihrem mittleren Bereich 14, der durch die beiden Materialbrücken gebildet wird, eine elastische Abbiegung nach unten, die sich in einer Materialdehnung an der Oberseite der Platte und in einer Materialkontraktion an der Unterseite der Platte äußert. Die jeweiligen elastischen Formänderungen werden durch die Dehnungsmeßwiderstände erfaßt und in elektrische Signale umgewandelt.

Wie Figur 2 desweiteren zeigt, erstreckt sich der Endbereich 15 der Trägerplatte 8 mit erhöhter Biegesteifigkeit über den Befestigungsbereich der Platte am unteren Stirnende hinaus bis zu den seitlichen Schlitzen 11. Damit ist ein ausreichend großer Bereich mit hoher Biegesteifigkeit vorgesehen, der sowohl für die Befestigung der Platte als auch zur Aufnahme von entsprechenden Kompensations-und Abgleichelementen 21 geeignet ist, die für die hier in Rede stehende Messung erforderlich sind, um durch Temperatur- bzw. andere Einflüsse bedingte Fehlmessungen zu verhindern. Diese Elemente sind somit ebenfalls in einem dehnungsarmen Bereich angeordnet, so daß keine Materialdehnungen die Funktionsweise dieser Elemente negativ beeinflussen.

Zur Befestigung der Trägerplatte und damit des Sensors an einem fest installierten Gestell dienen wiederum zwei Klemmplatten, die über und unter der Trägerplatte 8 in deren Befestigungsbereich vorgesehen sind und die Platte zwischen sich einklemmen. In der Figur ist nur die untere Klemmplatte 17 gezeigt. Die Klemmplatten weisen geeignete Bohrungen auf (nicht gezeigt), durch die sich geeignete Befestigungselemente, wie beispielsweise Schrauben, erstrecken, mit welchen einerseits die Klemmplatten gegeneinander gezogen werden und andererseits die Trägerplatte 8 über die untere Klemmplatte 17 am fest installierten Gestell befestigt wird.

Die untere Klemmplatte 17 besitzt eine mittige Ausnehmung, welche zur Aufnahme einer Anschlußleiste 18 für die Verdrahtung der Dehnungsmeßstreifen und der übrigen Elemente dient. Von dieser Anschlußleiste 18 aus erstreckt sich ein geeignetes Anschlußkabel 19.

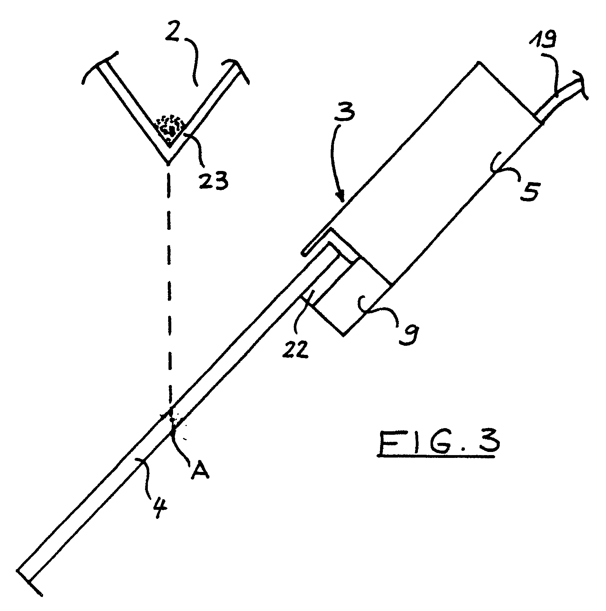

Figur 3 zeigt den Sensor 3 der Figur 2 in der Seitenansicht. Man erkennt, daß die Trägerplatte 8 durch eine Abdeckhaube 5 abgedeckt ist, die der Trägerplatte auch seitlichen Schutz bietet. Die Abdeckhaube 5 ragt auch etwas über die Aufprallplatte 4 vor. In dieser Figur ist die obere Klemmplatte 22 zu erkennen, die mit der Aufprallplatte 4 verklebt ist und zusammen mit der unteren Klemmplatte 16 die Trägerplatte am Aufprallplattenende festklemmt. Die Einrichtung 2 zur Erzeugung eines Gutstromes weist ein V-förmiges Austragsende 23 auf, wobei die durch den tiefsten Punkt der Austrittsöffnung verlaufende Vertikalebene sich durch die Empfindlichkeitsachse A der Aufprallplatte 4 erstreckt.

## Ansprüche

1. Vorrichtung zum kontinuierlichen Wägen von fließfähigem, insbesondere pulver- oder granulatförmigem, Gut mit einer Einrichtung, insbesondere Horizontalförderer oder Trichter, die einen Strom des Gutes erzeugt, der in Horizontalrichtung wandern kann, einem einseitig eingespannten Sensor mit einer im Strom des Gutes angeordneten, geneigten Aufprallplatte, die an einem mindestens einen Meßwertgeber aufweisenden Trägerelement befestigt ist, und einer elektrischen Schaltung, die die vom Meßwertgeber in Abhängigkeit von den durch Verbiegung entstandenen Materialdehnungen erzeugten elektrischen Signale verarbeitet und auswertet, dadurch gekennzeichnet, daß die Aufprallplatte (4) so angeordnet ist, daß die durch ihre Horizontalachse (A) verlaufende Vertikalebene parallel zur Wurf- bzw. Wanderebene des Gutstromes verläuft, und daß das Trägerelement ebenfalls als Platte (8) ausgebildet ist, deren gegenüberliegende Befestigungsbereiche (13, 15) durch Versteifung der Platte (8) gegenüber einem mittleren Bereich (14), in dem der Meßwertgeber angeordnet ist, im wesentlichen dehnungsfrei gehalten sind.

2. Vorrichtung nach Anspruch 1, dadurch gekennzeichnet, daß die Trägerplatte (8) ferner in einem dem Befestigungsbereich (15) des Sensors (3) benachbarten Bereich, in dem Kompensations- und Abgleichelemente (21) angeordnet sind, durch Versteifung im wesentlichen dehnungsfrei gehalten ist.

3. Vorrichtung nach Anspruch 1 oder 2, dadurch gekennzeichnet, daß die Trägerplatte (8) in den Befestigungsbereichen (13, 15) bzw. dem Bereich der Kompensations-und Abgleichelemente (21) durch Abkantung bzw. Abrundung (9) der Seitenränder versteift ist.

4. Vorrichtung nach einem der vorangehenden Ansprüche, dadurch gekennzeichnet, daß der mittlere Bereich (14) seitlich geschlitzt (11) ist und daß der mindestens eine Meßwertgeber auf der gebildeten Materialbrücke angeordnet ist.

5. Vorrichtung nach einem der vorangehenden Ansprüche, dadurch gekennzeichnet, daß sie zwei Meßwertgeber aufweist, die in den seitlichen Randabschnitten des mitteleren Bereiches (14) angeordnet sind.

6. Vorrichtung nach Anspruch 5, dadurch gekennzeichnet, daß der mittlere Bereich zwischen den beiden Meßwertgebern einen Schlitz (12) aufweist und daß die beiden Meßwertgeber auf den beiden gebildeten Materialbrücken angeordnet sind.

7. Vorrichtung nach Anspruch 3, dadurch gekennzeichnet, daß die der Aufprallplatte (4) zugewandte Stirnkante (10) der Trägerplatte (8) abgekantet ist.

8. Vorrichtung nach einem der vorangehenden Ansprüche, dadurch gekennzeichnet, daß die den Strom des Gutes erzeugende Einrichtung (2) an ihrem Austragsende (23) V- oder U-förmig ausgebildet ist.

9. Vorrichtung nach einem der vorangehenden Ansprüche, dadurch gekennzeichnet, daß die Aufprallplatte (4) über ein wärmeunempfindliches Zwischenstück an der Trägerplatte (8) befestigt ist.

10. Vorrichtung nach einem der vorangehenden Ansprüche, dadurch gekennzeichnet, daß die Aufprallplatte (4) aus Leichtmetall bzw. einer Leichtmetallegierung besteht.

11. Vorrichtung nach einem der vorangehenden Ansprüche, dadurch gekennzeichnet, daß die Aufprallplatte (4) Abkantungen aufweist.

12. Vorrichtung nach einem der vorangehenden Ansprüche, dadurch gekennzeichnet, daß die Trägerplatte (8) die Aufprallplatte (4) untergreift und daß unter der Trägerplatte (8) im Befestigungsbereich (13) für die Aufprallplatte eine Klemmplatte (16) angeordnet ist.

13. Vorrichtung nach einem der vorangehenden Ansprüche, dadurch gekennzeichnet, daß die Trägerplatte (8) in ihrem der Aufprallplatte (4) gegenüberliegenden Befestigungsbereich (15) eine obere und untere Klemmplatte (17) aufweist und daß die Befestigung des Sensors (3) über die untere Klemmplatte (17) erfolgt.

14. Vorrichtung nach Anspruch 13, dadurch gekennzeichnet, daß die untere Klemmplatte (17) eine mittlere Ausnehmung besitzt, in der eine Anschlußleiste (18) für die Verdrahtung des Meßwertgebers und der ggf. vorhandenen Kompensations-und Abgleichelemente vorgesehen ist.

15. Vorrichtung nach Anspruch 5, dadurch gekennzeichnet, daß sie vier Meßwertgeber aufweist, die paarweise auf der Ober- und Unterseite der beiden gebildeten Materialbrücken angeordnet sind.

16. Vorrichtung nach einem der vorangehenden Ansprüche, dadurch gekennzeichnet, daß der bzw. die Meßwertgeber Dehnungsmeßwiderstände (20) von Dehnungsmeßstreifen sind.

17. Vorrichtung nach einem der vorangehenden Ansprüche, dadurch gekennzeichnet, daß sie eine Abdeckhaube (5) für die Trägerplatte (8) besitzt.

## Claims

1. A device for continuously weighing of fluent, especially powder-like or granulate-like, material comprising means, especially a horizontal conveyor or a funnel, generating a stream of the material which can migrate in horizontal direction, a sensor restrained on one side and having an inclined impact plate located within the stream of the material, said impact plate being mounted at a support member including at least one transducer, and an electrical circuit processing and evaluating the electrical signals generated by said transducer in response to the material dilatations caused by bending, characterized in that the impact plate (4) is located such that the vertical plane extending through its horizontal axis (A) extends parallel with respect to the throw plane or migration plane of the stream of the material, and in that the support member is also formed as plate (8), the opposite fastening portions (13, 15) of said plate being maintained substantially dilatation-free by stiffening of said plate (8) with respect to a central portion (14) in which said transducer is located.

2. The device according to claim 1, characterized in that the support plate (8) is further maintained substantially dilatation-free in a portion adjacent to the fastening portion (15) of said sensor (3) and having located therein compensation members and balancing members (21).

3. The device according to claim 1 or 2, characterized in that the support plate (8) is stiffened in the fastening portions (13, 15) or the portion of the compensation members and balancing members (21) by bevelling or chamfering (9) of the lateral edges.

4. The device according to one of the preceding claims, characterized in that the central portion (14) is slotted (11) laterally and in that the at least one transducer is disposed on the formed bridge of material.

5. The device according to one of the preceding claims, characterized in that it has two transducers which are located in the lateral edge portions of the central portion (14).

6. The device according to claim 5, characterized in that the central portion between the two transducers includes a slot (12), and in that the two transducers are located on the two formed bridges of material.

7. The device according to claim 3, characterized in that the front edge (10) of the support plate (8) facing the impact plate (4) is chamfered.

8. The device according to one of the preceding claims, characterized in that the means (2) generating the stream of the material is formed V-like or U-like at its delivery end (23).

9. The device according to one of the preceding claims, characterized in that the impact plate (4) is mounted to the support plate (8) by means of a heat insensitive intermediate member.

10. The device according to one of the preceding claims, characterized in that the impact plate (4) consists of a light metal or of a light metal alloy.

11. The device according to one of the preceding claims, characterized in that the impact plate (4) is chamfered.

12. The device according to one of the preceding claims, characterized in that the support plate (8) supports the impact plate (4) from below, and in that a clamping plate (16) is located below the support plate (8) in the mounting portion (13) for the impact plate.

13. The device according to one of the preceding claims, characterized in that the support plate (8) has an upper and lower clamping plate (17) in its mounting portion (15) opposite to the impact plate (4), and in that the sensor (3) is mounted by means of the lower clamping plate (17).

14. The device according to claim 13, characterized in that the lower clamping plate (17) has a central recess in which is provided a connector block (18) for the wiring of the transducer and the compensation members and balancing members which are possibly present.

15. The device according to claim 5, characterized in that it includes four transducers which are located in pairs on the upper side and on the lower side of the two formed bridges of material.

16. The device according to one of the preceding claims, characterized in that the transducer or the transducers are strain gauge resistors (20) of strain gauge strips.

17. The device according to one of the preceding claims, characterized in that it has a covering hood (5) for the support plate (8).

## Revendications

1. Dispositif de pesée en continu de matériaux fluides, en particulier en poudre ou en granulés, comportant un dispositif, en particulier un convoyeur horizontal ou un entonnoir, qui produit un flux de matériau pouvant se développer en direction horizontale, un élément sensible encastré d'un côté avec une plaque d'impact inclinée disposée dans le flux du matériau qui est fixée à au moins un élément de support présentant un capteur de mesure, et un circuit électrique qui traite et évalue les signaux électriques produits par le capteur de mesure en fonction des extensions de matériau engendrées par la flexion, caractérisé en ce que la plaque d'impact (4) est disposée de façon que le plan vertical traversant son axe horizontal (A) soit parallèle au plan de projection et de migration du flux de matériau et que l'élément de support soit aussi conçu code une plaque (8) dont les zones de fixation opposées (13, 15) sont essentiellement préservées de toute extension par le renforcement de la plaque (8) par rapport à une zone centrale (8) dans laquelle est disposé le capteur de mesure.

2. Dispositif selon la revendication 1, caractérisé en ce que la plaque de support (8) est en outre essentiellement préservée de toute extension par renforcement dans la région proche de la zone de fixation (15) de l'élément sensible (3) dans laquelle sont disposés les éléments de compensation et d'équilibrage.

3. Dispositif selon les revendications 1 ou 2, caractérisé en ce que la plaque de support (8) est renforcée par chanfreinage ou arrondissement (9) des bords latéraux dans les zones de fixation (13, 15) ou dans la zone des éléments de compensation et d'équilibrage (21).

4. Dispositif selon une des revendications précédentes, caractérisé en ce que la région centrale (14) est fendue latéralement (11) et qu'au moins un capteur de mesure est disposé sur le pont de matériau ainsi formé.

5. Dispositif selon une des revendications précédentes, caractérisé en ce qu'il présente deux capteurs de mesure qui sont disposés dans les zones latérales de la région médiane (14).

6. Dispositif selon la revendication 5, caractérisé en ce que la zone centrale entre les deux capteurs de mesure présente une fente (12) et que les deux capteurs de mesure sont disposés sur les deux ponts de matériau ainsi formés.

7. Dispositif selon la revendication 3, caractérisé en ce que la face antérieure (10) de la plaque de support (8) tournée vers la plaque d'impact (4) est chanfreinée.

8. Dispositif selon une des revendications précédentes, caractérisé en ce que le dispositif produisant le flux de matériau (2) est conçu en forme de V ou U en son extrémité de déversement (23).

9. Dispositif selon une des revendications précédentes, caractérisé en ce que la plaque d'impact (4) est fixée par une pièce intermédiaire non sensible à la chaleur à la plaque de support (8).

10. Dispositif selon une des revendications précédentes, caractérisé en ce que la plaque d'impact (4) se compose de métal léger ou d'un alliage de métaux légers.

11. Dispositif selon une des revendications précédentes, caractérisé en ce que la plaque d'impact (4) présente des chanfreins.

12. Dispositif selon une des revendications précédentes, caractérisé en ce que la plaque de support (8) saisit par le dessous la plaque d'impact (4) et qu'une plaque de serrage (16) est disposée sous la plaque de support (8) dans la zone de fixation (13) de la plaque d'impact.

13. Dispositif selon une des revendications précédentes, caractérisé en ce que la plaque de support (8) présente une plaque de serrage supérieure et une plaque de serrage inférieure (17) dans sa zone de fixation (15) opposée à la plaque d'impact (4) et que la fixation du capteur (3) est assurée par la plaque de serrage inférieure (17).

14. Dispositif selon la revendication 13, caractérisé en ce que la plaque de serrage inférieure (17) possède une cavité centrale dans laquelle est prévue une réglette à bornes (18) pour le câblage du capteur de mesure et des éléments de compensation et d'équilibrage éventuels.

15. Dispositif selon la revendication 5, caractérisé en ce qu'il présente quatre capteurs de mesures qui sont disposés par paires sur les faces inférieure et supérieure des deux ponts de matériau formés.

16. Dispositif selon une des revendications précédentes, caractérisé en ce que le ou les capteur(s) de mesure sont des résistances de mesure d'extension (20) d'extensomètres.

17. Dispositif selon une des revendications précédentes, caractérisé en ce qu'il possède un couvercle (5) pour la plaque de support (8).

FIG. 1

FIG. 2

FIG.3